# EUROPÄISCHE PATENTANMELDUNG

(11) **EP 0 891 111 A2**
(43) Veröffentlichungstag der Anmeldung: **13.01.1999**
(21) Anmeldenummer: 98250206.4
(22) Anmeldetag: 11.06.1998
(51) Int. Cl.: H04Q 7/32, H04Q 7/22, H04Q 7/38

(54) **Verfahren zur Konfigurierung, insbesondere Freischaltung eines Endgerätes, Endgerät, Dienstleistungszentrale und Datenerfassungsgerät**

(30) Priorität: 07.07.1997 DE 19729933
(71) Anmelder: MANNESMANN Aktiengesellschaft, 40213 Düsseldorf (DE)
(72) Erfinder: Wichura, Torsten, Dipl.-Ing., 40547 Düsseldorf (DE); Möhlenkamp, Klaus, Dipl.-Ing., 40545 Düsseldorf (DE); Vieweg, Stefan, Dr.-Ing., 40547 Düsseldorf (DE)
(74) Vertreter: Henze, Lothar

(57) **Zusammenfassung**

Durch ein Verfahren zur Konfigurierung, insbesondere Freischaltung, eines Endgerätes (2) für die Nutzung von bestimmten (9 bis 14) oder allen Diensten mindestens einer Dienstleistungszentrale (2),
wobei im Endgerät (2) zur Nutzung von Diensten (9 bis 14) dieser Dienstleistungszentrale (2) erforderliche Informationen (18,19) zur Konfiguration des Endgerätes (2) in eine Eingabeeinrichtung (17) des Endgerätes (2) eingegeben werden, ein Endgerät bzw. eine Dienstleistungszentrale ist eine einfache, effiziente und sichere Fernkonfigurierung eines Endgeräte möglich.

## Beschreibung

Die Erfindung betrifft Verfahren zur Konfigurierung, insbesondere Freischaltung eines Endgerätes, ein Endgerät, eine Dienstleistungszentrale und ein Datenerfassungsgerät.

Alle oder bestimmte Dienste einer Dienstleistungszentrale sollen nicht jedem, sondern nur ausgewählten Benutzern, beispielsweise gegen Entgelt, zur Verfügung gestellt werden. Dies ist bei bestimmten Dienstleistungen von Dienstleistungszentralen schwierig, bei welchen die Dienstleistung über einen allgemein zugänglichen Kommunikationskanal, insbesondere über Funk, übermittelt wird. Wenn hierbei beispielsweise zur Nutzung bestimmter Dienste berechtigten Benutzern Endgeräte überlassen oder verkauft werden, welche eine eingebaute Dekodiereinrichtung für diese Dienste, wie beispielsweise per Funk übermittelte Dienstinformationen, aufweisen, wird bei Entwendung des Endgerätes der neue Besitzer automatisch eventuell zeitlich unbegrenzt berechtigter Nutzer der Dienste der Dienstleistungszentrale. Überdies ist eine Änderung derartiger Decodiereinrichtungen in Endgeräten sowie eine Neukonfigurierung der Endgeräte für neue Dienste, neue Codes oder neue Betriebssystemteile etc. sehr aufwendig.

Aufgabe der vorliegenden Erfindung ist deshalb die Schaffung von Verfahren sowie Endgeräten und Dienstleistungszentralen zur Durchführung der Verfahren, durch welche eine einfache und effiziente Konfigurierung eines Endgerätes für die Nutzung von bestimmten oder allen Diensten mindestens einer Dienstleistungszentrale ermöglicht wird.

Diese Aufgabe wird jeweils durch die Verfahren gemäß den unabhängigen Ansprüchen 1, 2 sowie durch ein Endgerät und eine Dienstleistungszentrale gemäß den unabhängigen Ansprüchen 22, 26 und 28 gelöst.

Die erfindungsgemäßen Verfahren und Endgeräte sowie Dienstleistungszentralen erlauben einfach und effizient eine Konfigurierung, insbesondere Freischaltung eines Endgerätes. Eine derartige Konfigurierung ist später einfach und effektiv zur Freischaltung oder Abschaltung bestimmter Dienste, zur Übermittlung und Implementierung eines neuen Betriebssystems in einem Endgerät, zum Sperren von Endgeräten und zum Anmelden und Abmelden bei bestimmten Dienstleistungszentralen etc.vorteilhaft möglich.
Konfigurierung im Sinne der Ansprüche kann dabei insbesondere die Freischaltung eines Endgerätes sein. Ferner kann die Konfigurierung auch die Übermittlung bestimmter Daten, wie Teile eines Betriebssystems und oder dienstrelevante Stammdaten, in das Endgerät umfassen. Ferner kann die Konfigurierung Sicherheitsüberprüfungen, insbesondere am Endgerät, umfassen; insbesondere kann überprüft werden, ob das Endgerät in das richtige Fahrzeug eingebaut ist, ob der Motor dieses Fahrzeuges gestartet wurde, ob vom Benutzer die richtige CodeNummer in das Endgerät eingegeben wurde etc.

Nach einer Konfigurierung durch das Endgerät nutzbare Dienst der Dienstleistungszentrale können beispielsweise der Empfang und die eventuelle Codierung und Dekodierung von Dienstinformationen, beispielsweise Verkehrsinformationen, Verkehrsprognosen etc. durch das Endgerät für dessen Benutzer sein. Dienste können auch interaktiv sein, wie beispielsweise eine interaktive Navigationshilfe für den Endgeräte-Benutzer durch die Dienstleistungszentrale.

Für die Nutzung der Dienste erforderliche Informationen können insbesondere Schlüssel, also Codes zur Decodierung von Informationen und/oder zum Einwählen in die Dienstleistungszentrale sein. Informationen können überdies auch Betriebssystemkomponenten, Parameter etc. für das Endgerät zusätzlich umfassen.

Ablegung von Informationen im Endgerät kann insbesondere deren Speicherung im Endgerät nach einer Übermittlung an das Endgerät sein.

Die Ablegung von einem ersten Teil dieser Informationen kann insbesondere u.a. die Ablegung eines ersten Teils eines Schlüssels oder eines ersten Schlüssels im Endgerät bei der Herstellung sein. Die Ablegung des Schlüssels kann insbesondere durch Speicherung in einem Rahmen RAM, einem ROM, einem EPROM, einem EEPROM, einer bestimmten Schaltung etc. sein.

Der später eingebbare weitere Teil dieser Informationen kann u.a. einen zweiten Schlüssel oder den zweiten Teil eines Schlüssels umfassen. Es können jedoch auch weitere Informationen, wie Teile eines Betriebssystems oder Parameter, sein. Dabei sind zweckmäßig bestimmte oder alle Dienste mindestens einer Dienstleistungszentrale nur von einem Endgerät, welches beide Informationen oder Schlüssel in sich abgelegt hat, möglich.

Eine Dienstleistungszentrale kann ein Vermittler von Diensten eines oder mehrerer Informationsanbieter sein. Eine Dienstleistungszentrale kann überdies oder stattdessen Anbieter eigener Dienste sein.

Eine Steuerung kann insbesondere ein Programm umfassen.

Besonders vorteilhafte Ausführungen ergeben sich aus den Unteransprüchen.

Ein Feischaltungs-Kommunikationskanal im Sinne der Ansprüche kann zur Freischaltung ebenso wie für andere Konfigurationen verwendet werden.

Vorzugsweise wird zur Konfiguration, insbesondere Freischaltung eines Endgerätes, der weitere Teil der Informationen über einen Freischaltungs-Kommunkationskanal von der Dienstleistungszentrale an das Endgerät gesandt. Damit läßt sich das Endgerät konfigurieren, freischalten, rekonfigurieren etc., ohne daß es räumlich zur Dienstleistungszentrale oder zu einem Service-Händler gebracht werden muß, indem es stattdessen fern-konfiguriert wird. Der Freischaltungskommunikationskanal kann insbesondere ein Mobilfunkkanal, insbesondere nach GSM-Standard sein, der eine besonders ortsunabhängige Konfiguration von Endgeräten erlaubt. Eine Verwendung eines Kurznachrichtenkanals, insbesondere eines Short-Message-Service (SMS), insbesondere nach GSM-Standard, ist besonders effektiv.

Vorzugsweise wird, wenn eine Freischaltung gewünscht wird, der Dienstleistungszentrale zur Freischaltung mindestens eine Kommunikationsteilnehmer-ldentifikation, insbesonder Telefonnummer des freizuschaltenden Endgerätes oder eines damit verbundenen oder darin eingebauten Mobiltelefons übergeben. Insbesondere bei Übergabe dieser Telefonnummer an die Dienstleistungszentrale über einen Anweisungs-Kommunikationskanal kann aus der Ferne einfach eine Konfiguration, insbesondere Freischaltung initialisiert werden.

Zu Beginn der Konfiguration, insbesondere der Freischaltung, können weitere Informationen am Endgerät berücksichtigt werden und die Dienstleistungszentrale durch das Endgerät informiert werden.

Die Informationen werden zweckmäßig in der Zentrale gespeichert. Dadurch ist die Zentrale im Besitz des oder der gleichen Informationen, insbesondere Schlüssel, wie das Endgerät. Die Informationen können insbesondere auch Decodierungs- und/oder Einwahl-Schlüssel für bestimmte Dienste einer bestimmten Dienstleistungszentrale und/oder individuelle Daten, wie Kfz-Daten, Farbe, Fahrgestellnummer, Baujahr, Modell, Benutzername, Benutzeradresse und Dienstedaten über gebuchte Dienste, Zeitraum der gebuchten Dienst etc. umfassen.

Mit dem erfindungsgemäßen Verfahren ist neben der Freischaltung eines Endgerätes einfach und effektiv eine Änderung der Konfiguration eines Endgerätes beispielsweise hinsichtlich eines Teilbetriebssystems für bestimmte Dienste, eine Neu-Konfigurierung eines Endgerätes für eine zusätzliche oder alternative Dienstleistungszentrale, eine Abmeldung eines Endgerätes, eine Sperrung eines Endgerätes bei Diebstahl vorteilhaft möglich.

Die Ausbildung eines Endgerätes gemäß dem unabhängigen Anspruch 22 ermöglicht einfach und kostengünstig eine universale Konfigurierung, insbesondere Sicherung des Endgerätes und der Dienste einer Dienstleistungszentrale. Durch Hinterlegung erster Informationen im Endgerät wird die Nutzung von Diensten einer Dienstleistungszentrale bereits relativ sicher auf dieses Endgerät beschränkt. Die Möglichkeit der Eingabe eines weiteren Teils dieser Informationen in einen Speicher bei der späteren Konfigurierung, insbesondere Freigabe, erlaubt universell und effektiv eine Konfiguration für Dienste und insbesondere Sicherung von Diensten gegen unerlaubte Nutzung. Dabei kann das Endgerät insbesondere eine Steuerung aufweisen, welche die Konfiguration des Endgerätes steuert und die mit dem bei der Konfiguration in das Endgerät eingegebenen weiteren Teil der Information zusammen mit dem ersten Teil der Information die Inanspruchnahme von Diensten einer Dienstleistungszentrale durch Decodieren von von dieser Dienstleistungszentrale gesendeten Dienstinformationen und/oder das Abfragen oder Nutzen von Diensten einer Dienstleistungszentrale ermöglicht.

Der Freischaltungs-Kommunkationskanal, über welchen ein Endgerät konfiguriert, insbesondere freigeschaltet wird, kann insbesondere der gleiche Kommunikationskanal sein, der auch später zur Übermittlung von Dienstinformationen im Rahmen von Diensten der Dienstleistungszentrale zwischen dieser und dem Endgerät verwendet wird. Ein Kommunikationskanal kann dabei insbesondere ein bestimmtes Telekommunikationsnetz, insbesondere ein Mobilfunknetz wie das GSM-Netz sein.

Weitere Merkmale und Vorteile der Erfindung ergeben sich aus den weiteren Unteransprüchen und der nachfolgenden Beschreibung eines Ausführungsbeispiels. Dabei zeigt
- Fig. 1a: als abstraktes Blockschaltbild die Kommunikation zwischen einer Dienstleistungszentrale, einem Endgerät und einem Auftraggeber einer Konfiguration,
- Fig. 1b: als allgemeines Flußdiagramm den Ablauf einer Konfiguration eines Endgeräts,
- Fig. 1c - 1e: detailliert die Erstinstallation eines neu gekauften Endgerätes,
- Fig. 2a - 2d: detailliert die Freischaltung eines neuen Endgerätes mit Löschung der Freischaltung eines alten Endgerätes
- Fig. 3: den Einbau eines Endgerätes in ein anderes Fahrzeug,
- Fig. 4a - 4b: detailliert die Umkonfiguration eines Endgerätes bei seiner Abmeldung,
- Fig. 5a - 5c: detailliert die Rekonfiguration eines Endgerätes für die Freigabe anderer Dienste,
- Fig. 6a - 6c: detailliert die Rekonfiguration eines Endgerätes bei Wechsel der Dienstleistungszentrale,

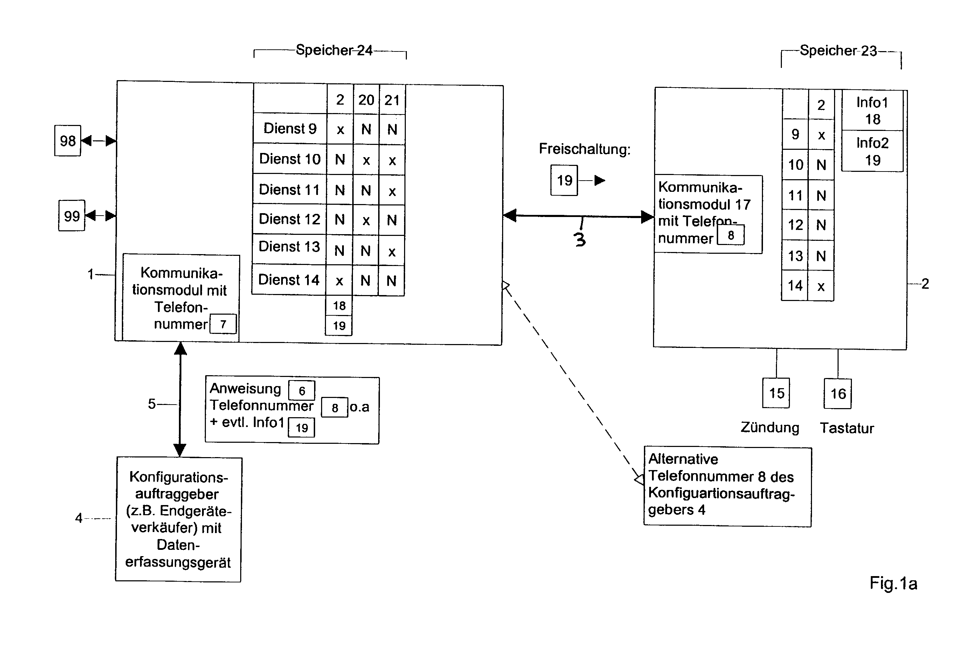

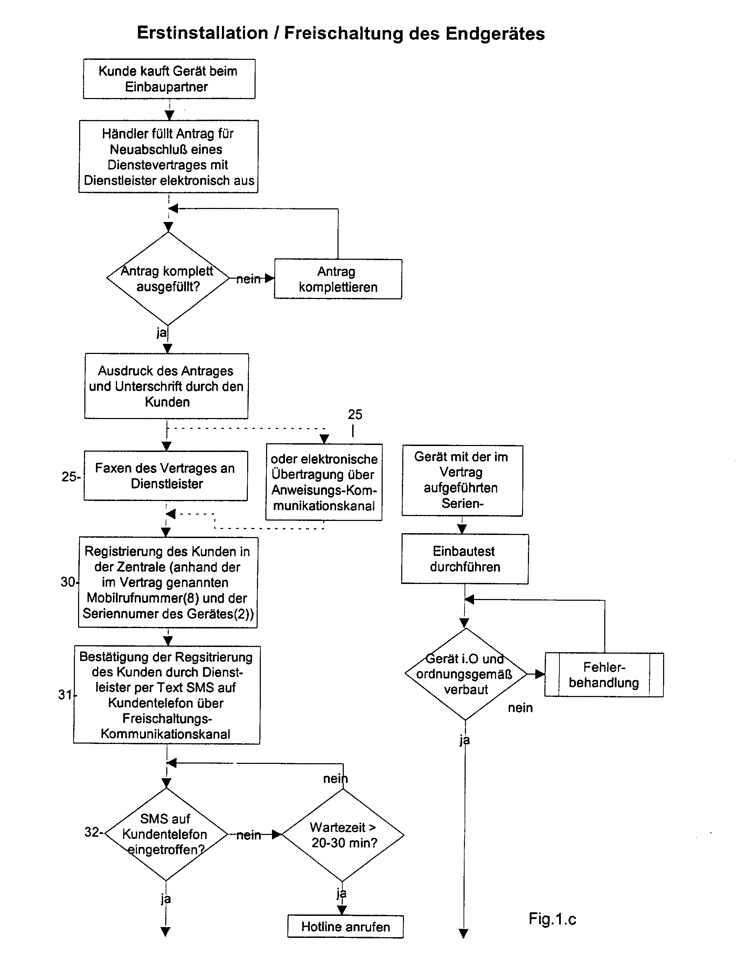

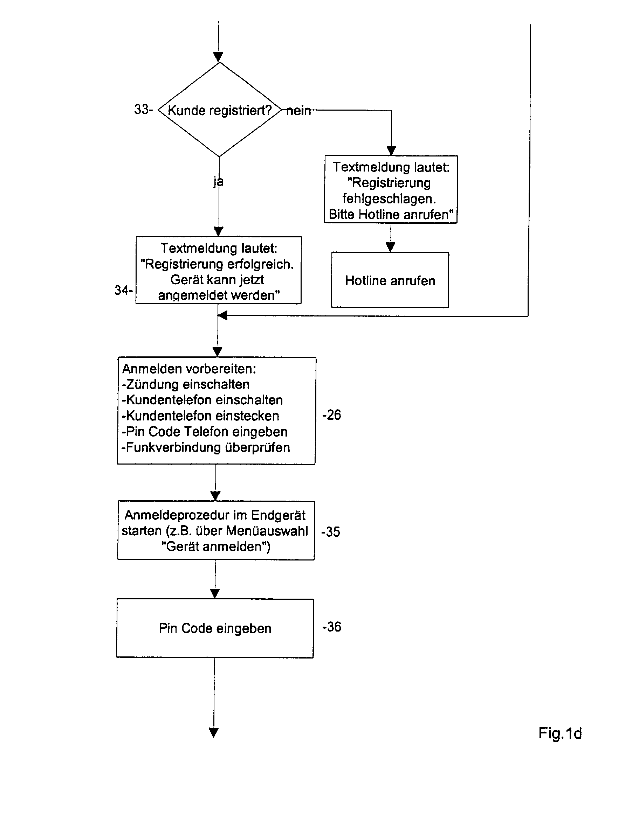

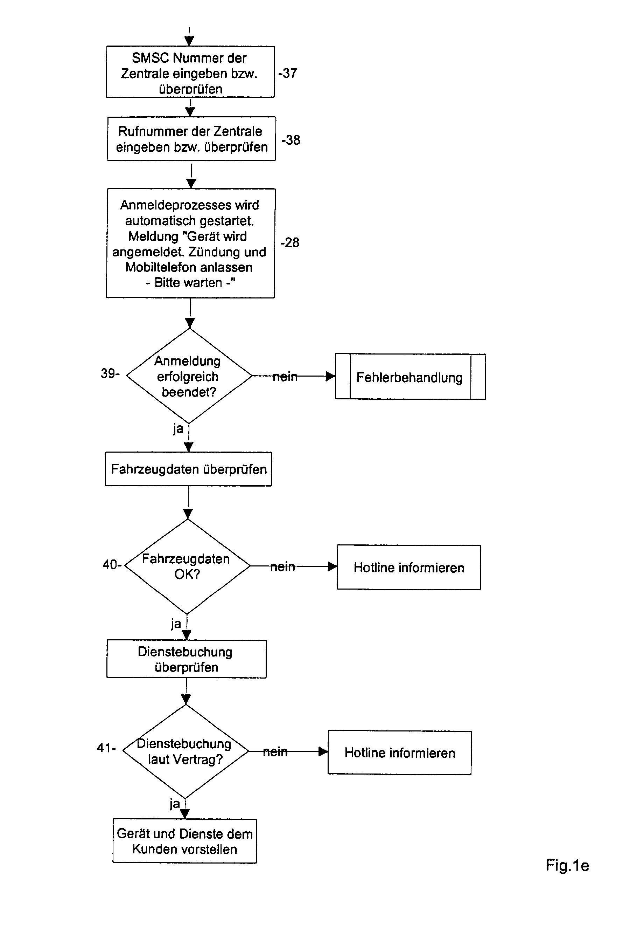

Figur 1a zeigt als abstraktes Blockschaltbild allgemein die Kommunikation zwischen einer Dienstleistungszentrale 1 und einem Endgerät 2 über einen Freischaltungs-Kommunikationskanl 3 sowie die Kommunikation zwischen der Diensteleistungszentrale 1 und einem Konfigurations-Auftraggeber 4 über einen Anweisungskanal 5.

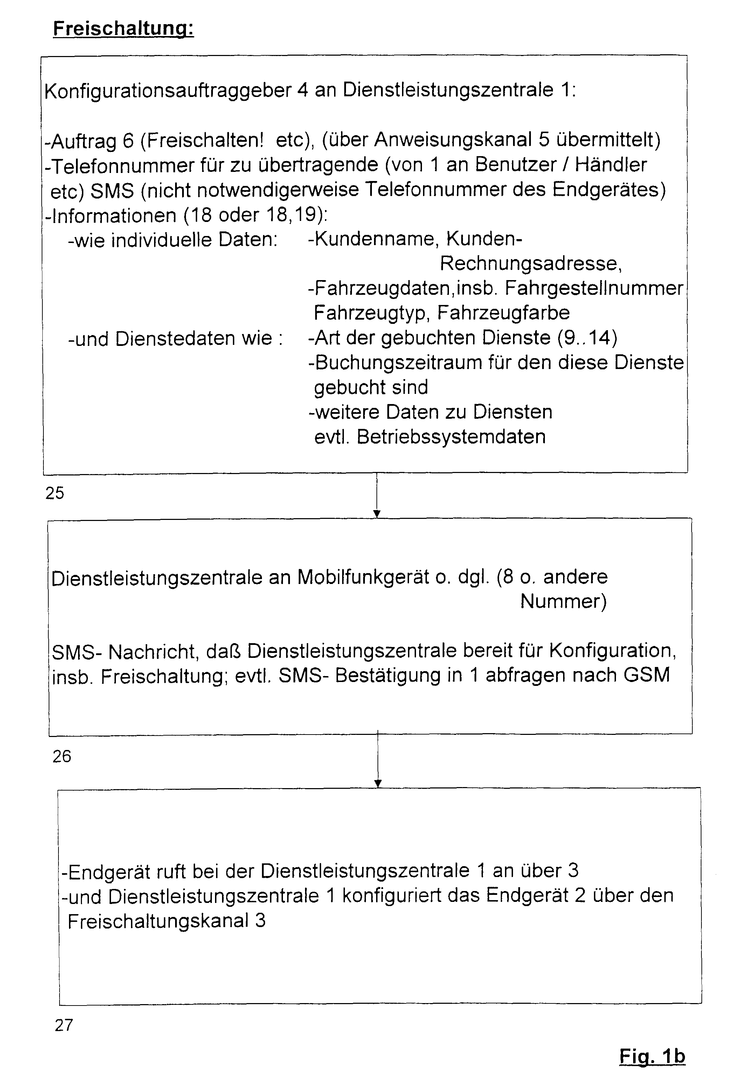

Die in Figur 1a als Blockschaltbild dargestellte Kommunikation während einer Konfiguration eines Endgerätes soll beispielhaft anhand des Blockschaltbildes in Figur 1b für die Freischaltung eines Endgerätes z.B. nach dem Kauf des Endgerätes oder bestimmter Dienste erläutert werden.

Nach dem Kauf eines Endgerätes sendet der Konfigurations-Auftraggeber 4, der beispielsweise der Verkäufer des Endgerätes 2, ein Servicetechniker oder der Kunde sein kann, über den Anweisungskanal 5 die Anweisung 6 zur Konfiguration des Endgerätes 2, hier der Freischaltung des Endgerätes 2, an die Dienstleistungszentrale 1. Der Anweisungskanal 5 kann beispielsweise ein Festnetz oder ein Mobilfunknetz sein. Eine zusätzliche Sicherung ergibt sich, wenn der Konfigurations-Auftraggeber 4, also beispielsweise ein Gerät eines Händlers, eine spezielle Telefonnummer 7 der Dienstleistungszentrale 1 kennt, über welche 7 Anweisungen 6 zur Konfiguration von Endgeräten entgegengenommen werden. Gegebenenfalls können für bestimmte Konfigurationen, wie das Freischalten eines Endgerätes, das Buchen bestimmter Dienste oder das Sperren eines Endgerätes bei Diebstahl, verschiedene Telefonnumern 7 vorgegeben sein und unterschiedlichen Datenerfassungsgeräten 4 beim Händler oder Service-Zentrum für Endgeräte bekannt sein.

Mit der Anweisung 6 an die Dienstleistungszentrale 1 zur Konfiguration des Endgerätes 2 wird eine Kommunikations-Teilnehmeridentifikation in Form einer Telefonnummer, z.B. eines Mobiltelefons etc. vom Konfigurations-Auftraggeber 4 an die Dienstleistungszentrale 1 übermittelt. Ferner kann übermittelt werden, welche Dienste 9 bis 14 der Dienstleistungszentrale 1 ein bestimmtes Endgerät 2 nutzen darf. Insbesondere werden individuelle Daten, wie Kfz-Fahrgestellnummer, Farbe, Fahrzeugtyp usw. und Dienstedaten, wie Art und Buchungszeitraum der gebuchten Dienste, übermittelt.

Die Dienstleistungszentrale sendet an eine vorgebbare Telefonnummer 8, z. ein Handy etc., z. B. eine Kurznachricht, insbesondere SMS-Kurznachricht nach GSM-Standard, daß das Endgerät nun eine Konfiguration auslösen kann. Ob die Kurznachricht beim Benutzer/Händler angekommen ist, kann z.B. über die SMS-Empfangsbestätigung nach GSM-Standard etc. in der Zentrale 1 geprüft werden. Hier wird die Konfiguration vom Händler etc. vom Endgerät aus gestartet, wenn dieser über die SMS der Zentrale auf seinem Mobilfunkgerät, z.B. Handy etc., informiert wurde, daß der Benutzer des Endgerätes 2 in der Zentrale registriert ist und nun eine Konfiguration möglich ist.

Hierauf können weitere Schritte am Endgerät 2 zur Sicherung erfolgen.
Beispielsweise kann am Endgerät 2 abgefragt werden, ob die Zündung 15 eines Fahrzeuges, in welches das Endgerät 2 eingebaut ist, läuft.

Ferner kann zur Sicherheit über eine Eingabevorrichtung 16, wie eine Tastatur, am Endgerät 2 ein Code vom Benutzer des Endgeräts abgefragt werden.

Nach ordnungsgemäßer Identifikation des Endgeräts 2 durch die Dienstleistungszentrale 1 ruft hier das Endgerät 2 die Dienstleistungszentrale 1 an und wird von dieser über den Freischaltungskanal 3 konfiguriert. Dabei kann beispielsweise zur Freischaltung eines neuen Endgerätes die gesamte (18,19) oder ein Teil 18 einer Information übertragen werden, welche zur Nutzung von bestimmten 9 bis 14 oder allen Diensten der Dienstleistungszentrale 1 erforderlich ist. Dies kann beispielsweise, dienstspezifische Parmeter oder Stammdaten oder ein Schlüssel sein, über welchen sich das Endgerät 2 über einen Dienstkanal später zur Benutzung von Diensten bei der Dienstleistungszentrale 1 einwählen kann. Stattdessen oder zusätzlich kann der Teil 18 der Informationen die Decodierung von über einen Dienstkanal später übertragenen Diensten, insbesondere Dienstinformationen, wie Verkehrsinformationen, im Endgerät 2 ermöglichen.

Ein erster Teil 19 der Informationen, welche zur Nutzung von bestimmten oder allen Diensten einer Dienstleistungszentrale erforderlich ist, kann im Endgerät bereits bei der Produktion oder vom Händer abgelegt sein. Er kann eventuell entweder bei der Freischaltung oder Konfiguration zur Identifikation des Endgeräts 2 durch eine Dienstleistungszentrale 1 über einen Freischaltungskanal 3 abgefragt werden. Alternativ oder zusätzlich kann er 19 zusammen mit dem zweiten Teil 18 der Information zum Einwählen des Endgeräts 2 in bestimmte Dienste 9 bis 14 der Dienstleistungszentrale 1 und/oder zur Decodierung von über einen Dienstkanal später gesendeten Dienstinformationen verwendet werden. Der Dienstkanal kann ein weiterer Kanal zwischen der Dienstleistungszentrale 1 und dem Endgerät sein. Er kann beispielsweise eine Radioübertragung sein. Er kann z.B. für bestimmte Dienste jedoch auch der gleiche Kanal wie der Feischaltungskanal sein.

Bei der Freischaltung eines Endgerätes 2 kann über den Freischaltungskanal 3 dem Endgerät 2 auch mitgeteilt werden, für welche der Dienste 9 bis 14 dieses Endgerät 2 zugelassen ist. Dabei können insbesondere individuelle Daten, wie Kfz-Typ, Fahrgestell-Nummer und dienstespezifische Daten, wie z. B. Art, Buchungszeitraum und/oder Informationen oder Daten zu Diensten 9 bis 14 übertragen werden.

Im Endgerät 2 kann in einem Speicher 23 abgelegt sein, welche Dienste das Endgerät 2 benutzen darf. Diese Dienste können dem Benutzer des Endgerätes beispielsweise über ein Display oder Anzeigegerät angezeigt und von diesem ausgewählt werden. Beispielsweise kann der Dienst 9, welcher im Speicher mit einem X gekennzeichnet ist und damit für das Endgerät 2 freigeschaltet ist, eine im Radio ausgestrahlte Verkehrsinformation sein, zu deren Decodierung ein Schlüssel innerhalb des zweiten Teils 18 der im Endgerät 2 gespeicherten Information notwendig ist. Der weitere Dienst 14, welcher im Speicher 23 des Endgeräts 2 mit einem X bezeichnet ist, kann beispielsweise eine interaktive Navigationshilfe über einen Dienstkanal 3 sein und steht hier dem Endgerät 2 ebenfalls zur Verfügung. Ein weiterer Dienst 11 ist im Speicher 23 des Endgerätes 2 mit einem N bezeichnet und steht diesem damit nicht zur Verfügung.

In der Dienstleistungszentrale 1 ist ebenfalls ein Speicher 24 vorgesehen, in welchem ebenfalls gespeichert ist, welches Endgerät 2, 20, 21 welche Dienste 9 bis 14 in Anspruch nehmen (X) oder nicht in Anspruch nehmen (N) kann. Das Endgerät 2 kann It. Speicher 24 der Dienstleistungszentrale die Dienste 9, 14 in Anspruch nehmen und die Dienste 10 bis 13 nicht in Anspruch nehmen. Bei interaktiven Diensten kann bei Einwahl eines Endgerätes 2 in eine Dienstleistungszentrale 1 anhand des Speichers 24 die Berechtigung 18,19 des Endgerätes 2 überprüft werden.

Der Ablauf der erläuterten Freischaltung eines Endgerätes 2 wird nun anhand des Blockschaltbildes in Figur 1b erläutert.

Im Schritt 25 wird vom Konfigurations-Auftraggeber 4 an die Dienstleistungszentrale 1 der Auftrag zur Konfiguration eines Endgerätes 2 gegeben, welches durch die dabei übergebene Telefonnummer 8 gekennzeichnet sein kann.

Dem Benutzer oder Händler wird per SMS die Konfiguration, insbesondere Freischaltung, angekündigt (Schritt 26). Die Zentrale 1 erhält eine Bestätigung des Eingangs des SMS beim Mobiltelefon etc. des Händlers etc. z. B. durch eine SMS-Quittung, hier nach GSM-Standard aus dem Telefonnetz.

Darauf ruft im Schritt 27 der Benutzer über das Endgerät oder eine zugeordnete Kommunikationseinrichtung die Dienstleistungszentrale 1 an (Schritt 26), und die Dienstleistungszentrale 1 konfiguriert das Endgerät.

Im Schritt 27 wird ferner das Endgerät 2 von der Dienstleistungszentrale 1 über den Freischaltungskanal 3 konfiguriert, hier freigeschaltet, durch Übergabe der zur Nutzung von bestimmten Diensten einer Dienstleistungszentrale erforderlichen Informationen, wie u.a. individuellen Informationen, wie Fahrzeugdaten, inbesondere Fahrzeugtyp, Fahrgestell-Nr., Baujahr usw. Dies (18, 9 bis 14) wird im Endgerät 2 abgespeichert.

Darauf oder zu einem früheren Zeitpunkt wird in der Dienstleistungszentrale 1 abgespeichert, welche Dienste 9 bis 14 das Endgerät 2 nutzen darf.

In den Figuren 1c bis 6c werden weitere Details von Beispielen von Konfigurationen eines Endgeräts 2 durch eine Dienstleistungszentrale 1 auf Befehl durch einen Konfigurations-Auftraggeber 4 erläutert.

Der Konfigurations-Auftraggeber 4 kann dabei u.U. ein Kunde sein. Als Konfigurations-Auftraggeber 4 kann jedoch auch ein Händler 4 allein autorisiert sein, der oder dessen Gerät einen bestimmten Code oder eine bestimmte Telefonnummer 7 der Dienstleistungszentrale 1 kennt, welcher bzw. welche zur Konfiguration erforderlich ist.
Schritte, die in den Figuren 1c bis 6c dabei Schritten in Fig. 1b einzeln oder zusammen entsprechen, sind jeweils mit den gleichen Bezugszeichen wie in Fig. 1b gezeichnet.

Die Dienstleistungszentrale 1 ist den Figuren 1c bis 6c als Zentrale bezeichnet, das Endgerät 2 als Gerät bezeichnet.

In Figur 1c bis 1e werden zunächst in ein Datenerfassungsgerät 4 eines Konfigurationsauftraggebers, insbesondere Händlers, Informationen eingelesen oder eingegeben. Dies sind insbesondere Name des Endgerät-Benutzers, Adresse, Fahrzeugdaten sowie Dienstedaten betreffend Art und Buchungszeitraum usw. von Diensten. Die vollständige, für eine Konfiguration geeignete Eingabe dieser Daten wird vom Datenerfassungsgerät überprüft und eventuell nachgefordert. Dann werden die Informationen in Schritt 30 über den (in Figur 1a gezeigten) Anweisungskanal 5 neben einer Mobilrufnummer 8 des Endgerätes 2 oder eines anderen Telefons eines Händlers etc.auch die weiteren Informationen vom Datenerfassungsgerät 4 an die Dienstleistungszentrale 1 übertragen. Darauf wird im Schritt 31 von der Dienstleistungszentrale 24 über den Freischaltungskanal 3 der Händler etc. über die Telefonnummer 8, welche mit dem Konfigurationsauftrag von 4 an 1 übermittelt wurde und z.B. eine beliebige Handy-Nummer des Handlers etc. sein kann, über die geplante Registrierung informiert. Dies erfolgt bei einem FreischaltungsKommunikationskanal 3 in Form eines Kurznachrichtenkanals (SMS).

Im Schritt 32 wird der Eingang der Kurznachricht SMS über die Bestätigung der Registrierung des Kunden durch die Dienstleistungszentrale überprüft über die SMS-Rückmeldung, z. B. nach GSM-Standard.

Im Schritt 33 wird geprüft, ob dieser Kunde in der Zentrale registriert ist. Im Schritt 34 wird die Konfigurierung, hier Freischaltung, fortgeführt.

Zur weiteren Sicherung wird im Endgerät 2 geprüft, ob im Endgerät 2 bestimmte Bedingungen vorliegen, insbesondere im Schritt 26, ob die Zündung (15) eingeschaltet ist, ein Code eingegeben ist etc.

Wenn sich im Schritt 35 der Kunde am Endgerät dann entscheidet, sein Gerät endgültig anzumelden und im Schritt 36 eine vorgegebene Codenummer eingibt, wird er im Schritt 37 aufgefordert, eine Kurznachrichten-Kanal-Nummer der Zentrale einzugeben oder zu überprüfen, worauf im Schritt 38 diese Eingabe auf Richtigkeit überprüft wird. Darauf wird im Schritt 28 über den Freischaltungskommunikationskanal 3 durch Anruf des Engerätes 2 bei der Diensteliestungszehtrale 1 der Anmeldeprozeß automatisch durchgeführt und falls (Schritt 39) die Anmeldung insoweit erfolgreich war und (Schritt 40) die Fahrzeugdaten in Ordnung sind, in Schritt 41 überprüft, ob die am Endgerät 2 ausgewählten Dienste den im Vertrag gebuchten und im Speicher 24 der Dienstleistungszentrale abgespeicherten Diensten entsprechen. Im Erfolgsfalle ist die Freischaltung des Endgerätes 2 abgeschlossen.

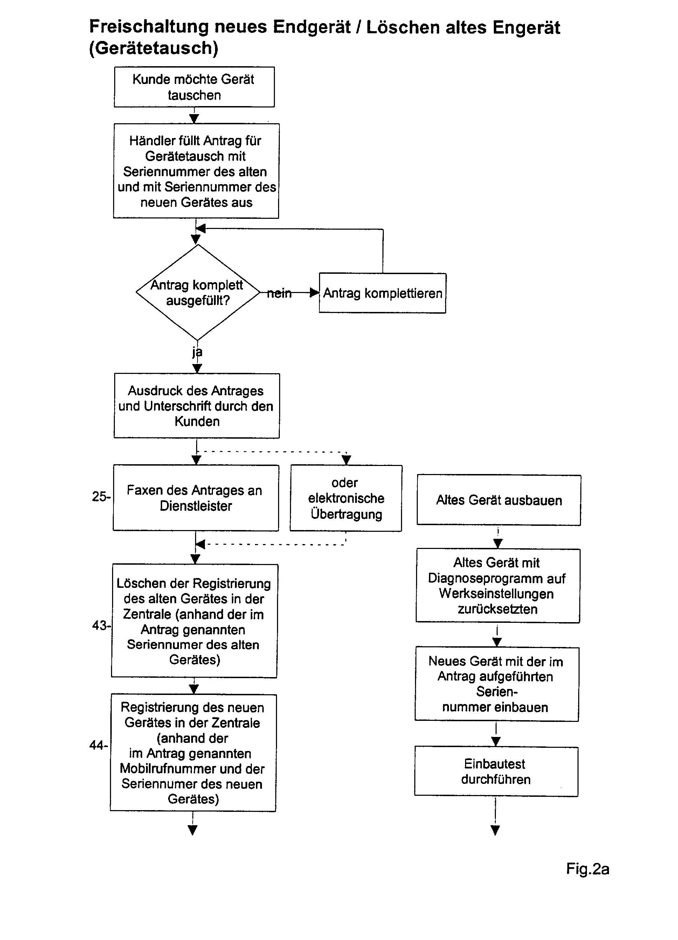

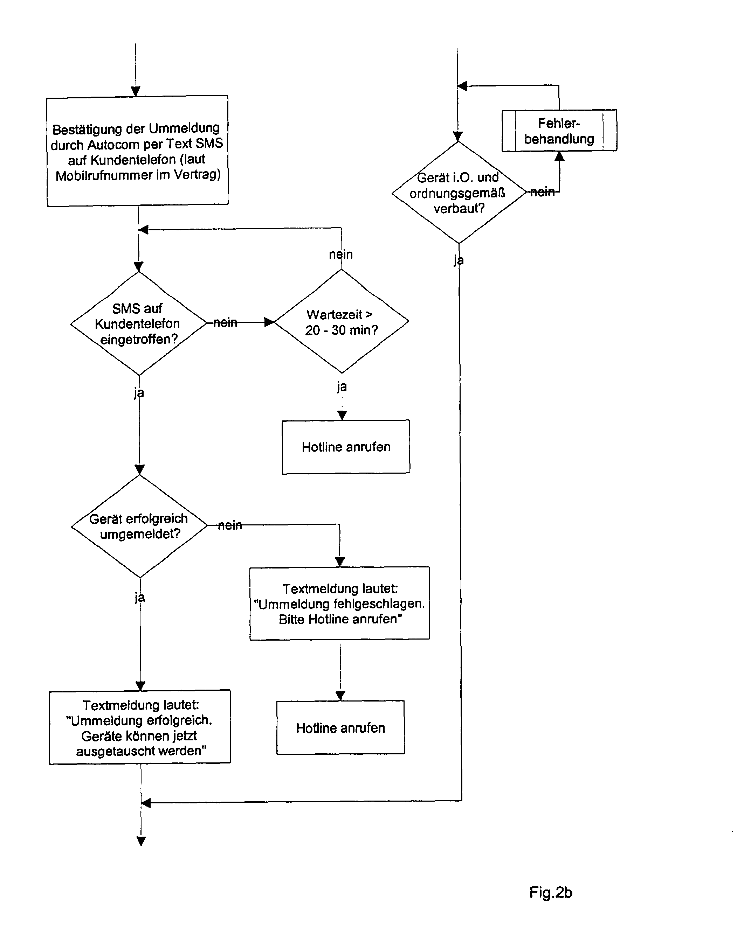

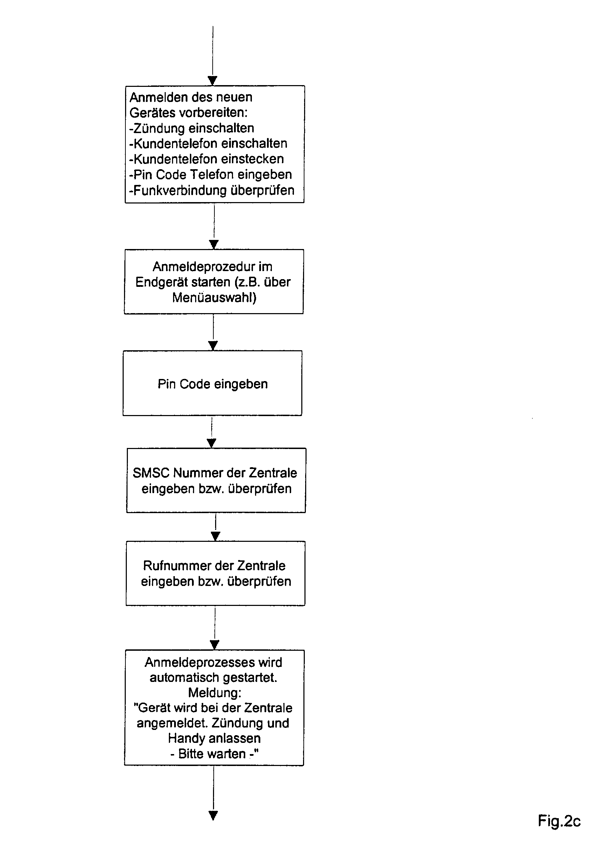

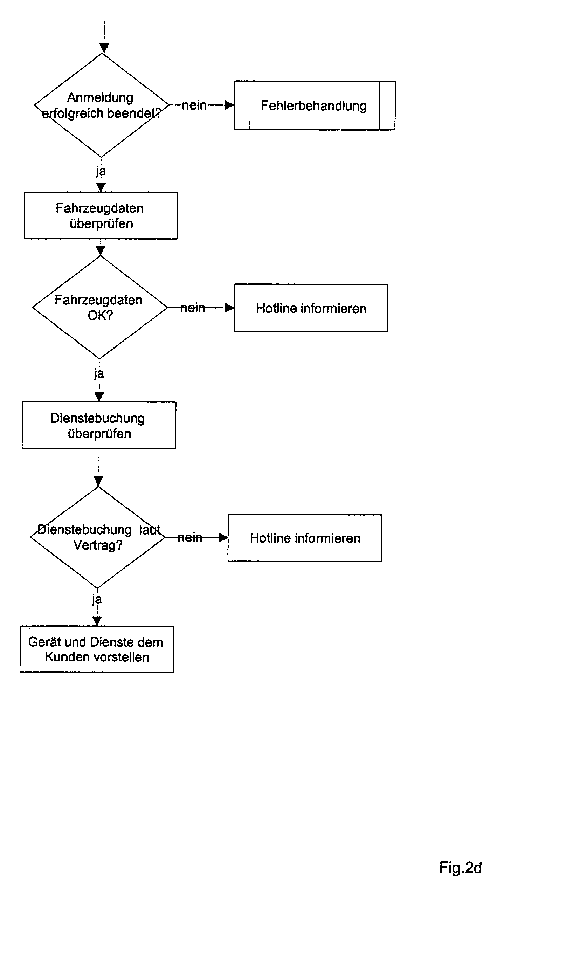

Figur 2a bis 2d zeigt ein weiteres Beispiel einer Konfiguration, nämlich die Freischaltung eines neuen Endgerätes unter Löschung eines alten Endgerätes. Auch hier kann die Aufforderung per Fax oder sonstiger elektronischer Übertragung, insbesondere Modem etc. im Schritt 25 erfolgen.

Hier wird zunächst im Schritt 43 die Freigabe des alten Gerätes (20) gelöscht, indem dieses so neu konfiguriert wird, daß es keine Dienste 9 bis 14 mehr in Anspruch nehmen kann, indem beispielsweise der zweite Teil 18 der Information in diesem Gerät gelöscht oder überschrieben wird.

Darauf wird die Registrierung des neuen Gerätes durchgeführt, indem dieses wie oben beschrieben freigeschaltet wird.

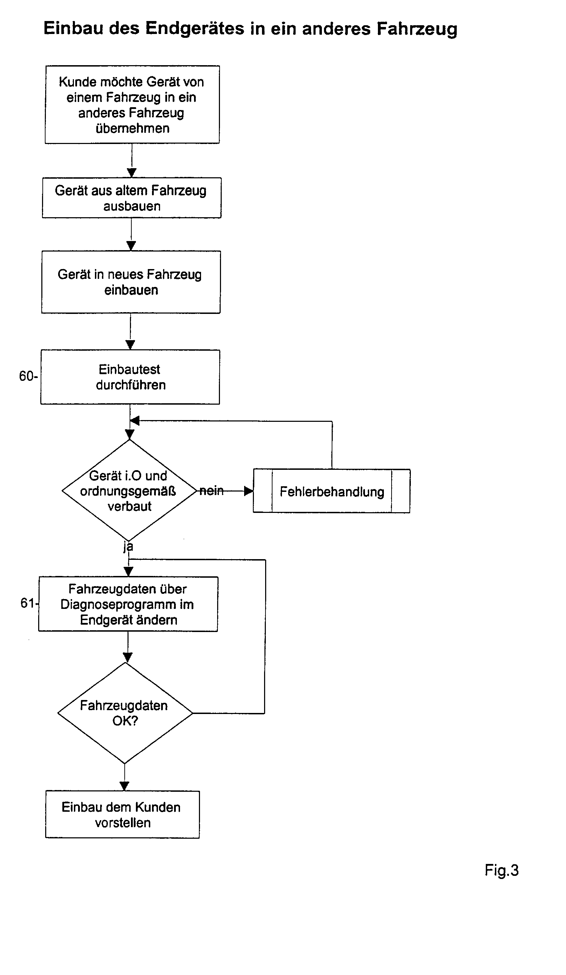

Figur 3 skizziert den Ausbau eines freigeschalteten Endgerätes 2 aus einem Fahrzeug und den Einbau des Endgerätes 2 in ein anderes Fahrzeug. Dabei wird hier im Schritt 60 nach dem Ausbau des Gerätes aus dem alten Fahrzeug und dem Einbau in ein neues Fahrzeug ein Einbautest durchgeführt. Dies bedeutet, daß das Endgerät 2 überprüft, ob es in das neue Fahrzeug ordnungsgemäß eingebaut ist. Darauf werden im Schritt 61 Fahrzeugdaten über ein Diagnoseprogramm im Endgerät 2 geändert.

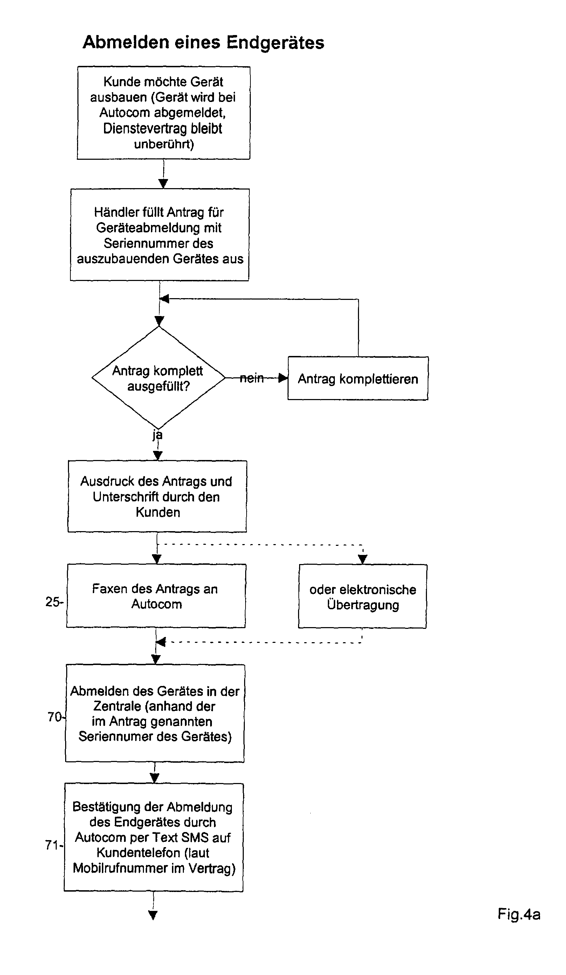

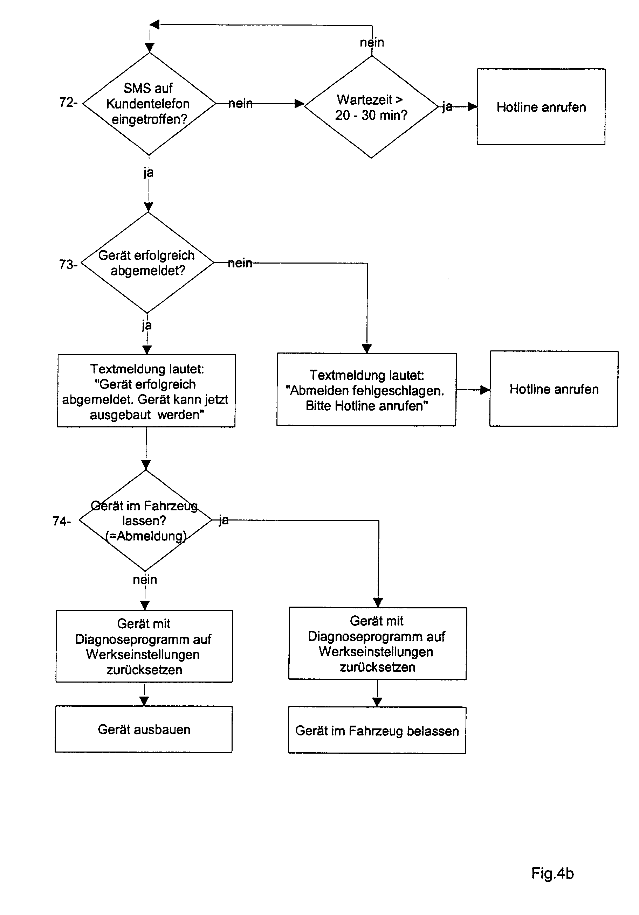

Figur 4a bis 4b verdeutlichen beispielhaft das Abmelden eines bestimmten Endgerätes 2.

Auch hier wird der Auftrag zur Abmeldung dieses Endgerätes 2 im Schritt 25 per Fax oder elektronisch übertragen. Darauf wird in der Zentrale 1 im Schritt 70 im Speicher 24 das Endgerät 2 für alle Dienste 9 bis 14 gelöscht.

Dies wird im Schritt 71 dem Benutzer des Endgerätes 2 durch Anrufen 3 der Telefonnummer 8 des Endgerätes 2 oder eines anderen Mobilfunkgerätes auf einem Display des Endgerätes 2 oder des anderen Mobilfunkgerätes bestätigt. Dazu kann beispielsweise eine Kurznachricht SMS gemäß Schritt 72 wiederholt gesendet werden.

Hierauf wird in Schritt 73 ff. geprüft, ob die Abmeldung erfolgreich war und dies von der Zentrale dem Endgerät gemeldet. Im Schritt 74 fragt das Endgerät 2 noch ab, ob es im Fahrzeug belassen wird oder ob es ausgebaut wird. Darauf wird mit einem Diagnoseprogramm das Endgerät 2 auf Werkseinstellung zurückgesetzt.

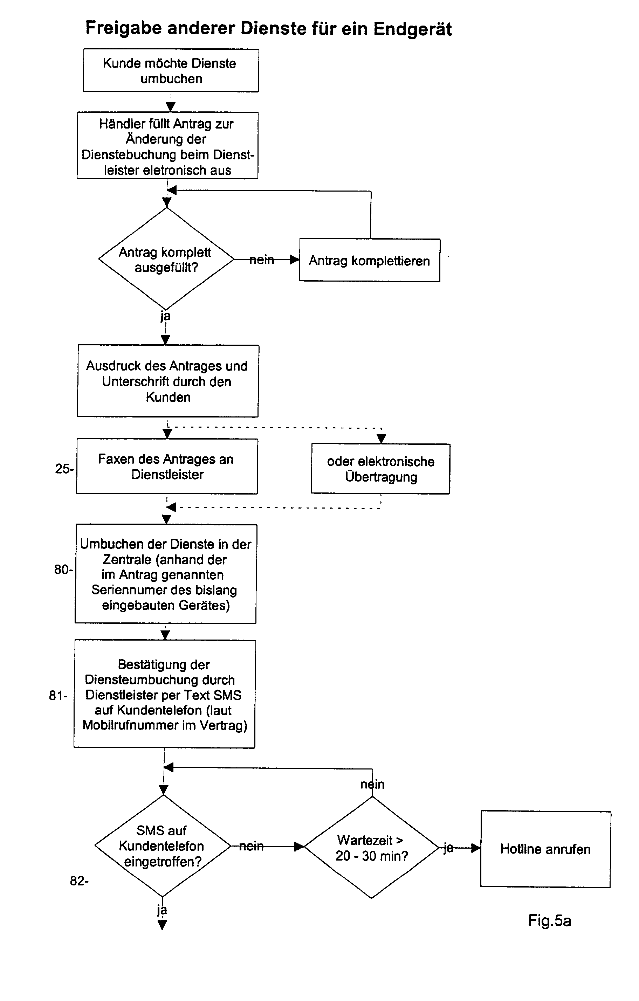

Figur 5a bis 5c beschreibt beispielhaft die Freigabe anderer Dienste für ein Endgerät 2. Schritt 25 zeigt dabei wieder die Übermittlung eines Auftrages 6 und einer Telefonnummer 8 über einen Anweisungskanal 5 an die Telefonnummer 7 einer Dienstleistungszentrale 24 in Figur 1a. Darauf werden in Schritt 80 in Figur 5a die (in Figur 1a gezeigten) Dienste 9 bis 14 im Speicher 24 der Dienstleistungszentrale 1 neu gebucht (X) oder gelöscht (N) für dieses Endgerät 2. Eine beantragte Umbuchung wird im Schritt 81 dem Händler auf einem Hancy etc. bestätigt. Ferner wird im Schritt 82 überprüft, ob diese bestätigende Kurznachricht SMS auf dem Kundentelefon eingetroffen ist. Dann wird im Schritt 83 dem Endgerät mitgeteilt, ob die Umbuchung erfolgreich war (Schritt 84) oder fehlgeschlagen ist (Schritt 85).

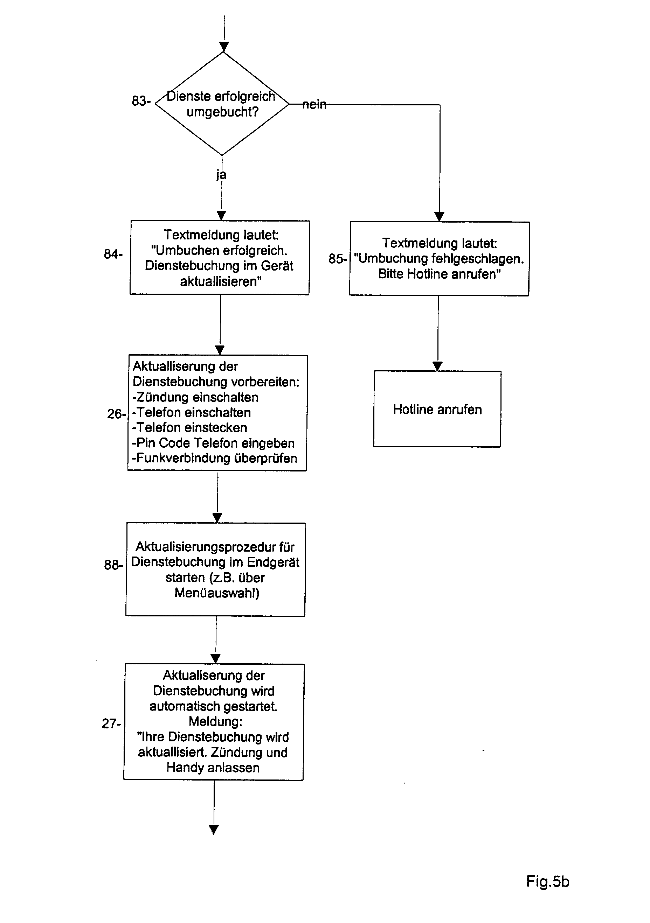

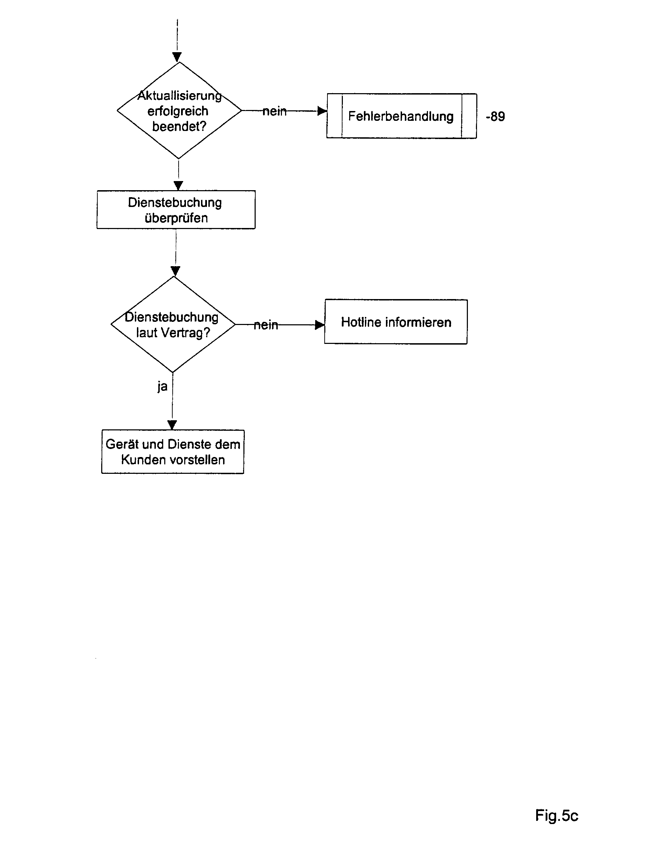

Bevor dabei die Dienstefreigaben 9 bis 14 endgültig im Endgerät 2 aktualisiert werden, wird im Schritt 26 in Figur 5b eine Sicherheitsüberprüfung durchgeführt. Wenn im Endgerät darauf im Schritt 86 die Diensteumbuchung ausgewählt und im Schritt 87 ein Code eingegeben wurde, wird darauf im Schritt 88 abgefragt, ob diese Dienste schon bestellt wurden. Darauf wird im Schritt 27 in Figur 5b die endgültige Einbuchung der Dienste 9 bis 14 in den Speicher 24 der Dienstleistungszentrale 1 durchgeführt. Die Dienste werden auch im Speicher 23 des Endgerätes 2 abgespeichert.

Falls die Dienste nicht erfolgreich umgebucht wurden, wird im Schritt 89 eine Fehlerbehandlung durchgeführt.

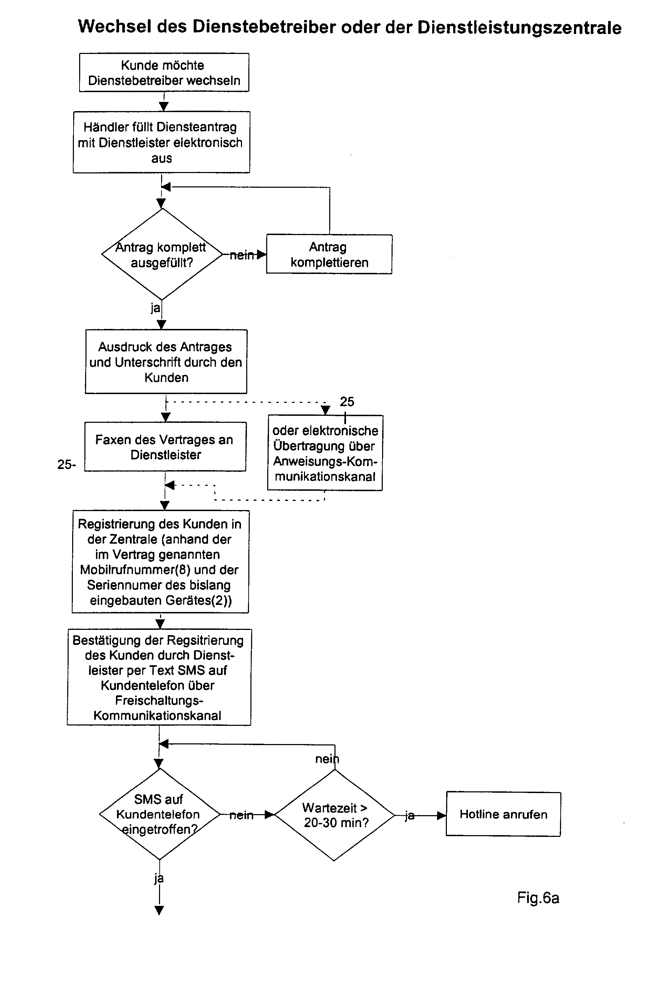

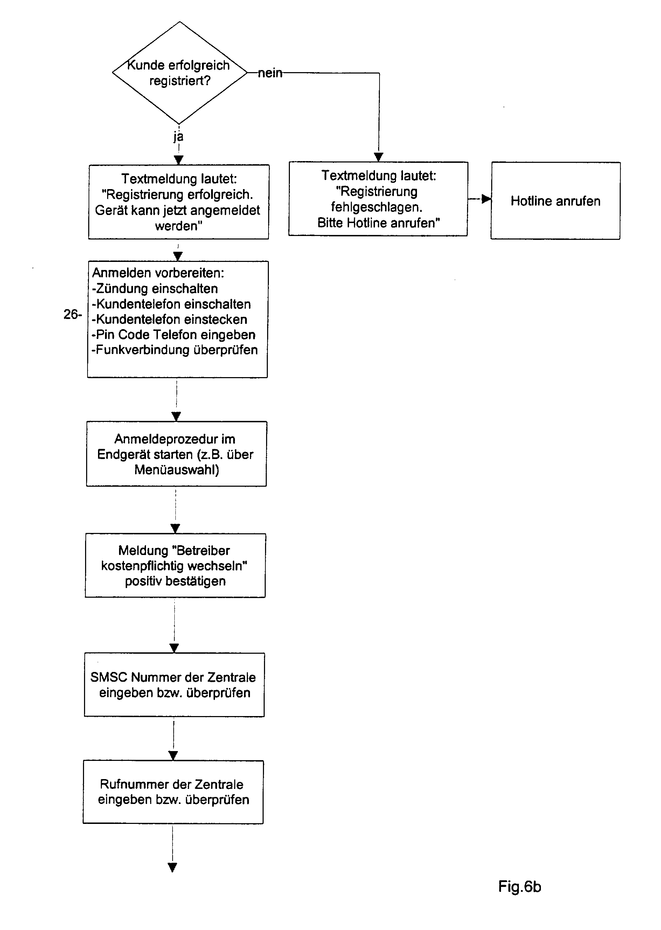

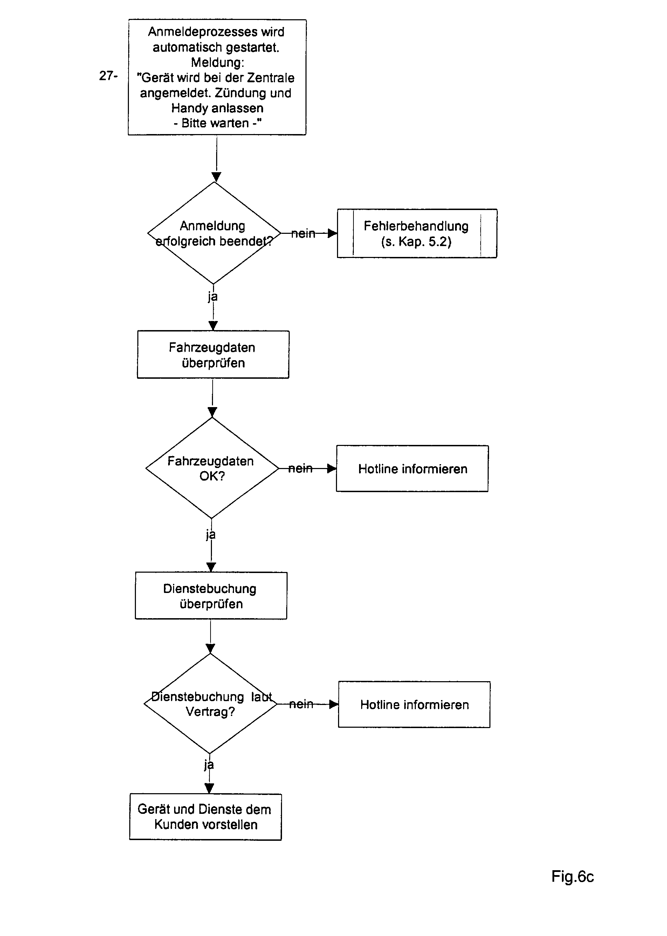

Figur 6a bis 6c erläutert im Detail eine Konfiguration eines Endgerätes für den Wechsel des Dienstebetreibers (also der Dienstleistungszentrale oder Informationsanbieters 98,99). Hierzu wird in der Dienstleistungszentrale das Endgerät für alle oder bestimmte Dienste gemäß Figur 6a bis 6c freigeschaltet.

Dienstinformationen können von der Dienstleistungszentrale 2 selber erzeugt und an Endgeräte 2, 20, 21 weitergegeben werden. Stattdessen oder zusätzlich können der Dienstleistungszentrale 2 auch von weiteren Dienstleistungszentralen 98, 99 bzw. von Informationsanbietern weitere Dienste 12, 13, 14, insbesondere Dienstinformationen, zur Verfügung gestellt werden und die Dienstleistungszentrale kann diese an berechtigte Endgeräte weitergeben.

## Patentansprüche

1. Verfahren zur Konfigurierung, insbesondere Freischaltung, eines Endgerätes (2) für die Nutzung von bestimmten (9 bis 14) oder allen Diensten mindestens einer Dienstleistungszentrale (2),
wobei im Endgerät (2) zur Nutzung von Diensten (9 bis 14) dieser Dienstleistungszentrale (2) erforderliche Informationen (18,19) zur Konfiguration des Endgerätes (2) in eine Eingabeeinrichtung (17) des Endgerätes (2) eingegeben werden.

2. Verfahren nach Anspruch 1,
dadurch gekennzeichnet,
daß ein erster Teil (19) dieser Informationen (18,19) im Endgerät bereits bei seiner Herstellung abgelegt und ein zweiter Teil der Informationen erst bei der Konfiguration eines Endgerätes übertragen wird.

3. Verfahren nach einem der vorhergehenden Ansprüche,
dadurch gekennzeichnet,
daß zur Konfiguration, insbesondere Freischaltung, des Endgerätes (2) der weitere Teil (18) dieser Informationen (18,19) über einen Feischaltungs-Kommunikationskanal (3) von der Dienstleistungszentrale (1) an das Endgerät (2) gesandt (3) wird.

4. Verfahren nach Anspruch 3,
dadurch gekennzeichnet,
daß als Feischaltungs-Kommunikationskanal (3) Mobilfunk, insbesondere nach dem GSM-Standard verwendet wird.

5. Verfahren nach Anspruch 3 oder 4,
dadurch gekennzeichnet,
daß als Feischaltungs-Kommunikationskanal (3) ein Kurznachrichtenkanal (SMS) verwendet wird.

6. Verfahren nach einem der vorhergehenden Ansprüche,
dadurch gekennzeichnet,
daß der Dienstleistungszentrale (1) zur Konfiguration, insbesondere Freischaltung, eines Endgerätes (2) mindestens eine Kommunikations-Teilnehmeridentifikation, insbesondere Telefonnummer 8, des Endgerätes (2) mit dem Auftrag (6) zur Konfiguration, insbesondere Freischaltung, übergeben (5) wird.

7. Verfahren nach Anspruch 6,
dadurch gekennzeichnet,
daß die Kommunikations-Teilnehmeridentifikation der Dienstleistungszentrale (4) von einem Konfigurations-Auftrageber (4) über einen Anweisungs-Kommunikations-Kanal (5) übergeben wird.

8. Verfahren nach Anspruch 6 oder 7,
dadurch gekennzeichnet,
daß die Dienstleistungszentrale (1) zur Freischaltung eines Endgerätes (2) zu diesem Endgerät (2) über die Kommunikations-Teilnehmeridentifikation (8) Kontakt aufnimmt und dem Endgerät über den Feischaltungs-Kommunikationskanal (3) den weiteren, zur Nutzung von Diensten erforderlichen Teil (18) der Informationen (18,19) übergibt (3).

9. Verfahren nach Anspruch 8,
dadurch gekennzeichnet,
daß bei der Kontaktaufnahme zwischen der Dienstleistungszentrale (1) und dem Endgerät (2) auf einem Display des Endgerätes (2) der Beginn des Freischaltungsvorgangs und/oder Aufforderungen an den Endgeräte-Bediener im Zusammenhang mit der Freischaltung angezeigt werden.

10. Verfahren nach Anspruch 8 oder 9,
dadurch gekennzeichnet,
daß bei der Konfiguration vom Endgerät (2) der erste Teil (19) der Informationen (18,19) zur Identifikation des Endgerätes (2) an die Dienstleistungszentrale (1) über den Feischaltungs-Kommunikationskanal (3) gesendet werden.

11. Verfahren nach einem der Ansprüche 8 bis 10,
dadurch gekennzeichnet,
daß bei der Konfiguration vom Endgerät weitere Informationen, insbesondere ein weiterer, dem Endgerät (2,23) und/oder der Zentrale (1,24) bekannter Code und/oder Informationen über das Laufen der Zündung eines Fahrzeuges, in welches das Endgerät eingebaut ist, an die Dienstleistungszentrale (1) über den Feischaltungs-Kommunikationskanal (3) gesendet werden.

12. Verfahren nach einem der Ansprüche 8 bis 11,
dadurch gekennzeichnet,
daß die ersten (19) und/oder die weiteren (18) Informationen in der Dienstleistungszentrale (1) gespeichert (24) werden.

13. Verfahren nach einem der vorhergehenden Ansprüche,
dadurch gekennzeichnet,
daß bei der Konfiguration eine Kommunikations-Teilnehmeridentifikation, insbesondere Telefonnummer oder Kurznachrichten-Telefonnummer der Dienstleistungszentrale (1) am Endgerät (2) abgefragt wird und darauf vom Endgerät (2) angewählt oder überprüft wird.

14. Verfahren nach einem der vorhergehenden Ansprüche,
dadurch gekennzeichnet,
daß zur Freischaltung eines neuen Endgerätes (2) unter gleichzeitiger Abmeldung eines anderen Endgerätes (Endgerätetausch) über einen Anweisungs-Kommunikations-Kanal (5) der Dienstleistungszentrale (1) das neue und das alte Endgerät gemeldet werden, worauf das alte Endgerät in der Zentrale als für die Dienste (9 bis 14) nicht berechtigt und das neue Endgerät als für bestimmte Dienste berechtigt gespeichert (24) wird.

15. Verfahren nach einem der vorhergehenden Ansprüche,
dadurch gekennzeichnet,
daß zur Konfiguration, insbesondere Freischaltung, eines Endgerätes (2) der gleiche Kommunikationskanal (3) wie zur späteren Übermittlung von einigen Dienstinformationen (9) verwendet wird.

16. Verfahren nach einem der vorhergehenden Ansprüche,
dadurch gekennzeichnet,
daß eine Freischaltung eines Endgerätes für mehrere Dienstleistungszentralen durchgeführt wird.

17. Verfahren nach einem der vorhergehenden Ansprüche,
dadurch gekennzeichnet,
daß das Endgerät in ein Fahrzeug eingebaut wird oder ist.

18. Verfahren nach einem der vorhergehenden Ansprüche,
dadurch gekennzeichnet,
daß die Dienste Verkehrsinformationen und/oder -Prognosen und/oder Verkehrsnavigationsinformationen sind.

19. Verfahren nach einem der vorhergehenden Ansprüche,
dadurch gekennzeichnet,
daß eine Konfiguration des Endgerätes zur Nutzung keiner Dienste (= Abschaltung) der Dienstleistungszentrale (1) erfolgt.

20. Verfahren nach einem der vorhergehenden Ansprüche,
dadurch gekennzeichnet,
daß bei Störungen bei der Konfiguration eine Kommunikationseinrichtung (17) des Endgerätes (2) mit einem Fehlerbehandlungszentrum (hotline) der Dienstleistungszentrale verbunden wird oder daß die Telefonnummer der Fehlerbehandlungszentrale auf einem Display des Endgerätes (2) ausgegeben wird.

21. Verfahren nach einem der vorhergehenden Ansprüche,
dadurch gekennzeichnet,
daß die Informationen (18, 19) Schlüssel sind, die zur Decodierung von von der Dienstleistungszentrale als Dienste (9) gesendeten Informationen sind und/oder Schlüssel zur Einwahl (3) des Endgerätes (2) in die Zentrale (1) zur Inanspruchnahme von Diensten (10) sind.

22. Endgerät, insbesondere mit einer Steuerung zur Durchführung des Verfahrens nach einem der Ansprüche 1 bis 21,
für die Nutzung von bestimmten oder allen Diensten (9 bis 14) einer Dienstleistungszentrale (1),
wobei ein Teil (19) von zur Nutzung von diesen Diensten (9 bis 14) dieser Dienstleistungszentrale (1) erforderlichen Informationen (18,19) in einem Speicher (23) des Endgerätes (2) abgelegt ist,
wobei das Endgerät (2) eine Eingabeeinrichtung (17) für einen weiteren, zur Nutzung von diesen Diensten (9 bis 14) dieser Dienstleistungszentrale (1) erforderlichen Teil (18) dieser Informationen (18,19) und einen Speicher (23) für diese Informationen aufweist.

23. Endgerät nach Anspruch 22,
dadurch gekennzeichnet,
daß das Endgerät eine Decodierungseinrichtung zur Decodierung von von der Dienstleistungszentrale (1) gesendeten (3) Dienstinformationen (9 bis 14) durch Teile (18,19) der Informationen aufweist.

24. Endgerät nach Anspruch 22 oder 23,
dadurch gekennzeichnet,
daß das Endgerät (2) eine Steuerung aufweist, durch welche das Endgerät (2) über einen Kommunikationskanal (3), insbesondere Mobilfunk, zur Inanspruchnahme von Diensten (14 bis 19) der Dienstleistungszentrale (1) bei der Dienstleistungszentrale (1) unter Übersendung von im Speicher (23) des Endgerätes (2) befindlichen Informationen (18,19) an die Dienstleistungszentrale (1) einwählbar ist.

25. Endgerät nach einem der Ansprüche 22 bis 24,
dadurch gekennzeichnet,
daß durch die Steuerung weitere Informationen, welche dem Endgerät zur Freischaltung von der Dienstleistungszentrale übergebbar (3) sind, in einem Speicher (23) ablegbar sind.

26. Dienstleistungszentrale mit einer an einen Anweisungs-Kommunikations-Kanal (5) anschließbaren Eingabeeinrichtung (7),
einer an einen mit dem Endgerät verbindbaren Freischaltugs-Kommunikations-Kanal (3), insbesondere Mobilfunkkanal, insbesondere Kurznachrichtenkanal, anschließbaren Sendeeinrichtung und
einem Speicher (24), in dem weitere Informationen (18) aus der Eingabeeinrichtung (7) ablegbar sind, und aus welchem Speicher (24) weitere Informationen (18) an die Sendeeinrichtung übergebbar sind, und mit einer Steuerung.

27. Dienstleistungszentrale nach Anspruch 26,
deren Steuerung ein Programm zur Durchführung des Verfahrens nach einem der Ansprüche 1 bis 21 umfaßt.

28. Datenerfassungsgerät (4) zur Erfassung von Informationen (18) für die Konfiguration eines Endgerätes durch eine Dienstleistungszentrale, mit einer Eingabevorrichtung und einem Speicher für die Eingabe von Informationen für die Konfiguration, mit einer Übertragungseinrichtung (4,5) zum Übertragen der Informationen an die Dienstleistungszentrale zum Ermöglichen und/oder Auslösen der Konfiguration des Endgerätes durch die Dienstleistungszentrale und mit einer Steuerung und/oder einem Programm zur Steuerung der Eingabe und der Übertragung und zur Überprüfung der Eingabe auf Plausibilität und/oder Vollständigkeit.
